# EUROPÄISCHE PATENTANMELDUNG

(11) **EP 0 830 819 A2**
(43) Veröffentlichungstag der Anmeldung: **25.03.1998**
(21) Anmeldenummer: 97111133.1
(22) Anmeldetag: 03.07.1997
(51) Int. Cl.: A22C 25/17

(54) **Vorrichtung zum Entfernen einer Oberflächenschicht von beispielsweise Fischfilets**

(30) Priorität: 23.09.1996 DE 29616512 U
(71) Anmelder: NORDISCHER MASCHINENBAU RUD. BAADER GMBH + CO KG, 23560 Lübeck (DE)
(72) Erfinder: Brocksch, Rainer, 23562 Lübeck (DE)

(57) **Zusammenfassung**

Bei einer Vorrichtung zum Entfernen einer Oberflächenschicht von beispielsweise Fischfilets mit einer Zugwalze (1) , einem dieser zugeordneten Andrückschuh (2) mit einer Andrückfläche (6) und einer in einem Führungsschlitz (12) desselben geführten bewegten Messerklinge (3) ist die den Führungsschlitz begrenzende Auflagefläche (9) mit einer Anzahl unmittelbar hinter der Einlaufkante (10) der Andrückfläche (6) beginnender und zur Rückenfläche (14) des Andrückschuhs (2) hin offener Nuten (13) unterbrochen. Diese haben die Aufgabe, in den Gleitspalt zwischen der Messerklinge (3) und der Auflagefläche (9) eingedrungene insbesondere zähharte Partikel wie Sehnen abzuleiten und so die Gefahr des Blockierens zu eliminieren, was noch dadurch unterstützt wird, daß die Nuten (13) an ihrem Grunde mit Durchbrüchen (15) versehen sind, die den Nutenraum mit dem Spalt (7) verbinden.

## Beschreibung

Die Erfindung geht aus von einer Vorrichtung zum Entfernen einer Oberflächenschicht von insbesondere Fischfilets, umfassend eine angetriebene Zugwalze mit griffiger Mantelfläche, einen für die Halterung einer bewegten Messerklinge ausgebildeten Andrückschuh mit einer der Mantelfläche unter Belassen eines Spaltes gegenüberliegenden Andrückfläche sowie einem die Einlaufkante derselben bestimmenden und die Messerklinge führend aufnehmenden Führungsschlitz.

Vorrichtungen mit diesen und ähnlichen Konstruktionsmerkmalen sind grundsätzlich bekannt. So ist beispielsweise in der DE - C- 37 00 342 eine Vorrichtung zum entsprechenden Bearbeiten von Fischfilets beschrieben, bei der eine Zugwalze Verwendung findet, der ein Andrückschuh mit einer Andrückfläche zugeordnet ist, die der Mantelfläche der Zugwalze unter Belassen eines Spaltes gegenüberliegt. Der Andrückschuh ist mit einem Führungsschlitz für eine Messerklinge versehen, die oszillierend angetrieben ist.

Beim Einsatz bewegter Messerklingen kommt es bei derartigen Vorrichtungen immer wieder vor, daß insbesondere beim Enthäuten von Fischfilets, vor allem im Schwanzbereich zwischen Haut und Muskelfleisch befindliche Sehnen oder andere zähharte Filetbestandteile wie Schuppen in den Gleitspalt zwischen Messerklinge und Führungsschlitz gelangen mit dem Effekt, daß die Messerklinge eingeklemmt und im Extremfall blockiert wird, was bis zum Bruch der Messerklinge oder Zerstörung von Antriebsteilen führen kann.

Der Erfindung liegt die Aufgabe zugrunde, solche Blockierungen sicher zu vermeiden.

Diese Aufgabe wird bei einer Vorrichtung der eingangs beschriebenen Art erfindungsgemäß dadurch gelöst, daß die der Andrückfläche zuweisende Begrenzungsfläche des Führungsschlitzes mit Durchbrüchen versehen ist, die in die Andrückfläche münden.

Die mit dieser Ausführung erzielbaren Vorteile bestehen insbesondere in einem Selbstreinigungseffekt, der dadurch wirksam ist, daß in den besagten Gleitspalt hineingedrängte Partikel aufgrund der Relativbewegung zwischen der Messerklinge und dem Andrückschuh in den Bereich der Durchbrüche gelangen und aus dem Spalt zwischen der Andrückfläche des Andrückschuhs und der Mantelfläche der Zugwalze durch letztere entfernt werden.

Dieser Selbstreinigungseffekt läßt sich durch Verringerung des Abflußwiderstandes der besagten Partikel optimieren, was dadurch geschehen kann, daß die Begrenzungsfläche des Führungsschlitzes durch eine Anzahl Nuten unterbrochen ist, die unmittelbar hinter der Einlaufkante der Andrückfläche beginnen, wobei die Nuten so angeordnet sind, daß jede derselben an ihrem Grunde mit mindestens einem Durchbruch versehen ist.

Eine fertigungs- und reinigungstechnisch vorteilhafte Ausführung kann darin bestehen, daß der Führungsschlitz anderseitig durch eine mit dem Andrückschuh lösbar verbindbare Abdeckung gebildet ist, wobei das Schlitzbreitenmaß mit der Messerklinge eine Gleitpassung bildet.

Weitere vorteilhafte Ausführungen sind aus den übrigen Unteransprüchen zu entnehmen.

Die Erfindung ist nachstehend anhand eines in der Zeichnung dargestellten Ausführungsbeispieles näher beschrieben. Es zeigen:
- Fig. 1: eine schematische Teil-Ansicht der Grundeinrichtung perspektivisch dargestellt,
- Fig. 2: eine Teil-Draufsicht auf den Andrückschuh bei entfernter Abdeckung in Richtung des Pfeiles A gesehen,
- Fig. 3: eine Teil-Draufsicht entsprechend Fig. 2 auf einen modifizierten Andrückschuh, und
- Fig. 4: einen Teilquerschnitt durch den Andrückschuh nach Fig. 2 und 3 längs der Schnittlinie IV - IV.

In einem nicht näher dargestellten Gestell einer Enthäutemaschine für Fischfilets sind als erfindungsrelevant lediglich eine auf geeignete Weise gelagerte und angetriebene Zugwalze 1 und ein dieser zugeordneter Andrückschuh 2 mit einer Messerklinge 3 angeordnet.

Die Zugwalze 1 weist eine Mantelfläche 4 auf, die in bekannter Weise durch Längsnuten 5 griffig ausgeführt ist.

Der Mantelfläche 4 der Zugwalze 1 ist im Bereich ihrer ablaufenden Seite der Andrückschuh 2 gegenübergestellt. Dieser ist mit einer Andrückfläche 6 versehen, deren Krümmungsradius dem der Mantelfläche 4 der Zugwalze 1 im wesentlichen entspricht und die Zuordnung zu der Mantelfläche 4 ist so getroffen, daß diese mit der Andrückfläche 6 einen im wesentlichen einheitlichen Spalt 7 bildet. Der Andrückschuh 2 ist um eine nur angedeutet dargestellte Achse 8 von der Mantelfläche 4 der Zugwalze 1 gegen Federkraft unter Vergrößerung des Spaltes 7 wegschwenkbar.

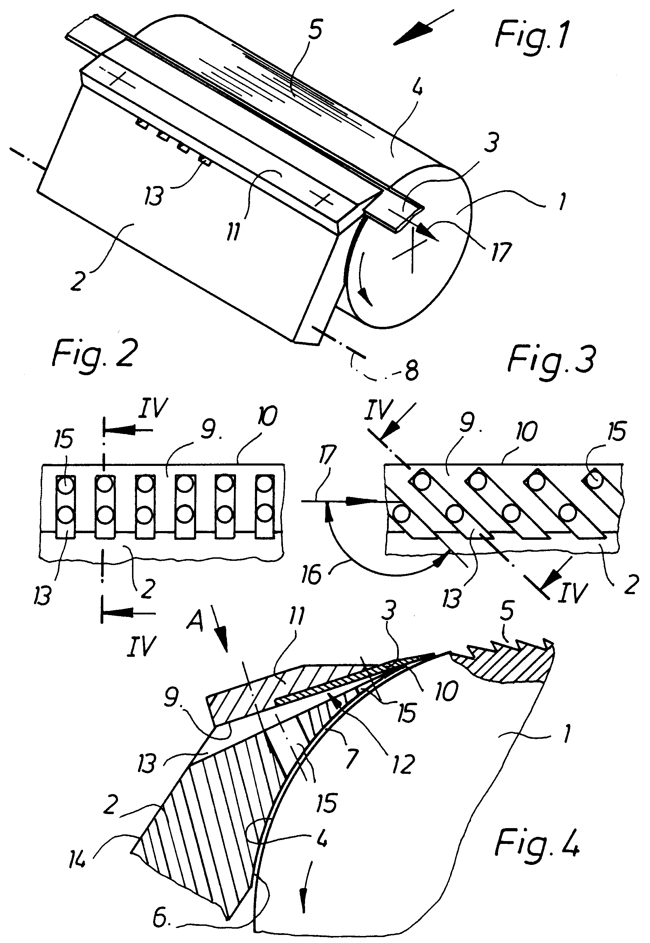

Der Andrückschuh 2 hat eine obere Begrenzungsfläche 9 , die mit der Andrückfläche 6 eine keilförmige Einlaufkante 10 bildet. Auf der Begrenzungsfläche 9 ist eine Abdeckung 11 lösbar befestigt, die mit der Begrenzungsfläche 9 einen Führungsschlitz 12 für die Messerklinge 3 einschließt, die hier als endloses, auf geeignete Weise umlaufend angetriebenes Bandmesser ausgebildet ist. Die Begrenzungsfläche 9 ist mit Nuten 13 versehen, die im Bereich unmittelbar hinter der Einlaufkante 10 beginnen und zu der Rückenfläche 14 des Andrückschuhs 2 hin offen sind. Am Grunde der Nuten 13 sind Durchbrüche 15 in Form von Bohrungen angeordnet, die den Nutenraum mit dem Spalt 7 zwischen der Andrückfläche 6 und der Mantelfläche 4 der Zugwalze 1 verbinden (Fig. 4) . Die Nuten 13 können entsprechend Fig. 2 in Förderrichtung verlaufen oder entsprechend Fig. 3 so, daß der Anlaufwinkel 16 zwischen der Bewegungsrichtung der Messerklinge 3 und den Flanken der Nuten 13 ein stumpfer ist.

Die Wirkungsweise der Vorrichtung ist folgende:
Ein zu enthäutendes Filet wird mit der Hautseite aufliegend und mit dem Schwanzende voraus durch einen geeigneten Zubringerförderer auf die Mantelfläche 4 der Zugwalze 1 gebracht und von dieser der Messerklinge 3 zugeführt. Bei Ankunft an der Messerklinge 3 schneidet diese zwischen Haut und Muskelfleisch ein, worauf kurz danach die gelösten Hautteile in den Spalt 7 zwischen der Andrückfläche 6 und die Mantelfläche 4 der Zugwalze 1 gelangen. Dies führt spontan zur Klemmung der Haut und damit zu einem sicher fördernden Angriff an den jeweils freigeschnittenen Hautteilen. Dabei erfährt der Andrückschuh 2 eine durch die Anfederung bestimmte Auftriebskraft, die bewirkt, daß die Andrückfläche 6 auf der Innenseite der zähen Haut gleitet und die Messerklinge 3 in einen Abstand zu der Mantelfläche 4 bringt, die jeweils der Stärke der abzutrennenden Haut entspricht.

Die bei diesem Prozeß in den Gleitspalt zwischen der Messerklinge 3 und der Begrenzungsfläche 9 des Führungsschlitzes 12 gelangenden insbesondere zähharten Partikel geraten aufgrund der Relativbewegung zwischen Messerklinge und Begrenzungsfläche in den Bereich der Nuten 13 , wo sie sich ohne Klemmwirkung sammeln können. Dabei finden diese Partikel einen Ausweg entweder durch das offene Ende der Nuten 13 und/oder durch die Durchbrüche 15 hindurch, wobei im letzteren Falle eine Abführung durch die Zugwalze 1 erfolgt. Bei der Ausführung nach Fig. 3 entsteht aufgrund der Schrägstellung der Flanken der Nuten 13 ein Abstreifeffekt, der auf die in diesen befindlichen Partikel einen Vorschub in Richtung zum offenen Ende hin ausübt.

### Bezugszeichenliste

- 1: Zugwalze
- 2: Andrückschuh
- 3: Messerklinge
- 4: Mantelfläche
- 5: Längsnut
- 6: Andrückfläche
- 7: Spalt
- 8: Achse
- 9: Begrenzungsfläche
- 10: Einlaufkante
- 11: Abdeckung
- 12: Führungsschlitz
- 13: Nut
- 14: Rückenfläche
- 15: Durchbruch
- 16: Anlaufwinkel
- 17: Bewegungsrichtung

## Patentansprüche

1. Vorrichtung zum Entfernen einer Oberflächenschicht von insbesondere Fischfilets, umfassend eine angetriebene Zugwalze (1) mit griffiger Mantelfläche (4) , einen für die Halterung einer bewegten Messerklinge (3) ausgebildeten Andrückschuh (2) mit einer der Mantelfläche (4) unter Belassen eines Spaltes (7) gegenüberliegenden Andrückfläche (6) sowie einem die Einlaufkante (10) derselben bestimmenden und die Messerklinge (3) führend aufnehmenden Führungsschlitz (12) , **dadurch gekennzeichnet,** daß die der Andrückfläche (6) zuweisende Begrenzungsfläche (9) des Führungsschlitzes (12) mit Durchbrüchen (15 versehen ist, die in die Andrückfläche (6) münden.

2. Vorrichtung nach Anspruch 1 , **dadurch gekennzeichnet,** daß die Begrenzungsfläche (9) des Führungsschlitzes (12) durch eine Anzahl Nuten (13) unterbrochen ist, die unmittelbar hinter der Einlaufkante (10) der Andrückfläche (6) beginnen, wobei die Nuten (13) so angeordnet sind, daß jede derselben an ihrem Grunde mit mindestens einem Durchbruch (15) versehen ist.

3. Vorrichtung nach Anspruch 1 , **dadurch gekennzeichnet,** daß der Führungsschlitz (12) anderseitig durch eine mit dem Andrückschuh (2) lösbar verbindbare Abdeckung (11) gebildet ist, wobei das Schlitzbreitenmaß mit der Messerklinge (3) eine Gleitpassung bildet.

4. Vorrichtung nach einem der Ansprüche 1 bis 3 , **dadurch gekennzeichnet,** daß die Durchbrüche (15) als im wesentlichen radial zu der Zugwalze (1) ausgerichtete Bohrungen ausgeführt sind.

5. Vorrichtung nach einem der Ansprüche 1 bis 4 , **dadurch gekennzeichnet,** daß der Spalt (7) zwischen der Mantelfläche (4) der Zugwalze (1) und der Andrückfläche (6) des Andrückschuhs (2) gegen Federkraft erweiterbar ist.

6. Vorrichtung nach einem der Ansprüche 1 bis 5 , **dadurch gekennzeichnet,** daß die Messerklinge (3) als endloses, angetriebenes Bandmesser ausgeführt ist.

7. Vorrichtung nach einem der Ansprüche 2 bis 6 , **dadurch gekennzeichnet,** daß die Nuten (13) zu der Bewegungsrichtung der Messerklinge (3) verschränkt angeordnet sind, so daß der Anlaufwinkel (16) zwischen der Bewegungsrichtung (17) der Messerklinge und den Flanken der Nuten (13) ein stumpfer ist.
